# FASCICULE DE BREVET EUROPEEN

(11) **EP 2 252 978 B1**
(45) Date de publication et mention de la délivrance du brevet: **03.05.2017**
(21) Numéro de dépôt: 09722973.6
(22) Date de dépôt: 11.03.2009
(51) Int. Cl.: G06Q 20/34, G07F 7/10

(54) **CARTE A CIRCUIT INTEGRE AYANT UN PROGRAMME D'EXPLOITATION MODIFIABLE ET PROCEDE DE MODIFICATION CORRESPONDANT**
CHIPKARTE MIT VERÄNDERBAREM BETRIEBSPROGRAMM UND ENTSPRECHENDES ÄNDERUNGSVERFAHREN
INTEGRATED CIRCUIT CARD HAVING A MODIFIABLE OPERATING PROGRAM AND CORRESPONDING METHOD OF MODIFICATION

(30) Priorité: 13.03.2008 FR 0801389
(43) Date de publication de la demande: 24.11.2010
(73) Titulaire: MORPHO, 92130 Issy-Les-Moulineaux (FR)
(72) Inventeur: PEPIN, Cyrille, F-78570 Andresy (FR); ROUDIERE, Guillaume, F-92100 Boulogne Billancourt (FR)
(74) Mandataire: Lavialle, Bruno François Stéphane
(86) Numéro de dépôt international: PCT/FR2009/000249
(87) Numéro de publication internationale: WO 2009/115709

(56) Documents cités:
- EP-A- 0 475 837
- EP-A- 0 883 062
- EP-A- 1 306 759
- WO-A1-98/43212
- FR-A- 2 764 716
- US-A- 4 905 200
- US-A1- 2004 210 720
- US-A1- 2005 228 959
- WILKINSON M A: "BREAKPOINTS IN MASKED MICROCONTROLLERS TO FIC LATENT SOFTWARE DEFECTS" MOTOROLA TECHNICAL DEVELOPMENTS, MOTOROLA INC. SCHAUMBURG, ILLINOIS, US, vol. 26, 1 novembre 1995 (1995-11-01), page 2/03, XP000552115 ISSN: 0887-5286
- GEIB H ET AL: "FLEXIBLE METHOD FOR CODE ENHANCEMENT OF MASKED PROCESSOR DEVICES" MOTOROLA TECHNICAL DEVELOPMENTS, MOTOROLA INC. SCHAUMBURG, ILLINOIS, US, vol. 35, 1 juin 1998 (1998-06-01), page 64/65, XP000862619 ISSN: 0887-5286
- RANKL ET AL: "SMART CARD HANDBOOK, PASSAGE" SMART CARD HANDBOOK, XX, XX, 1 janvier 1998 (1998-01-01), pages 1,14,91,103,107-110,127/1, XP002927893

## Description

La présente invention concerne une carte à circuit intégré utilisable notamment comme support de données par exemple pour constituer un moyen d'identification du porteur de la carte, un moyen d'accès à un lieu ou un matériel, un moyen de paiement comme une carte bancaire ou une carte de téléphone.

### ARRIERE PLAN DE L'INVENTION

Une carte à circuit intégré comporte généralement un corps sur lequel est fixé un circuit intégré comprenant un processeur formant une unité de traitement, une mémoire morte de type ROM (« Read-Only Memory », mémoire à lecture seule) et une mémoire morte programmable de type EEPROM (« Electricaly Erasable Programmable Read-Only Memory », mémoire à lecture seule programmable et effaçable électriquement). L'unité de traitement est agencée pour exécuter un programme d'exploitation qui est contenu dans la mémoire morte ROM et qui comprend des parties fonctionnelles définissant chacune une fonction de l'unité de traitement. Les données utilisées par l'unité de traitement sont généralement contenues dans la mémoire morte programmable. Les mémoires mortes ROM sont moins coûteuses que les mémoires mortes programmables de sorte que l'utilisation d'une mémoire morte ROM pour l'enregistrement du programme d'exploitation permet de limiter le coût de la carte à circuit intégré. Cependant, le programme d'exploitation doit être enregistré dans la mémoire morte ROM au moment de la fabrication du circuit intégré et n'est plus modifiable par la suite. L'amélioration du programme d'exploitation et, d'une manière générale, toute modification de celui-ci suppose donc la fabrication de nouveaux circuits intégrés.

Le document US-A-2005/0228959 décrit un procédé de chargement de parties de programme, ou « patchs », dans une carte à circuit intégré et l'exécution de ces patchs en lieu et place de parties d'un programme originellement contenu dans la carte.

Le document EP-A-475837 décrit un procédé d'exécution d'un programme chargé dans une carte à circuit intégré après vérification d'une signature associée.

### OBJET DE L'INVENTION

Un but de l'invention est de fournir un moyen permettant de modifier le programme d'exploitation de manière simple rapide et, éventuellement, applicable à des cartes existantes.

### BREVE DESCRIPTION DE L'INVENTION

A cet effet, on prévoit, selon l'invention, une carte à circuit intégré comportant une unité de traitement (3) associée à une mémoire morte ROM (4) et à une mémoire morte programmable (5), la mémoire morte ROM contenant un programme d'exploitation (10) qui est exécutable par l'unité de traitement et qui comporte des parties fonctionnelles (8) définissant chacune une fonction de l'unité de traitement, le programme comportant un point d'entrée/sortie (9) pour chaque partie fonctionnelle et un identifiant est associé à chaque partie fonctionnelle, en ce que la mémoire morte programmable contient un bloc de données comprenant au moins une partie fonctionnelle substituable (8') qui correspond à une des parties fonctionnelles du programme d'exploitation contenu dans la mémoire morte ROM et qui est associée à un identifiant correspondant à celui de la partie fonctionnelle correspondante du programme d'exploitation, caractérisé en ce que le bloc de données est enregistré dans la mémoire morte programmable (5) sous la forme d'au moins un motif comprenant successivement l'identifiant (13) de la partie fonctionnelle substituable (8'), une indication (14) de la longueur de la partie fonctionnelle substituable, la partie fonctionnelle substituable et une valeur d'intégrité calculée sur l'identifiant, l'indication et la partie substituable, en ce que l'unité de traitement est programmée pour, préalablement à l'exécution de chaque partie fonctionnelle du programme d'exploitation, lire l'identifiant de chaque partie fonctionnelle substituable et le comparer à celui de chaque partie fonctionnelle du programme d'exploitation à exécuter et, le cas échéant, exécuter la partie fonctionnelle substituable à la place de la partie fonctionnelle correspondante ; en ce que l'unité de traitement (3) est programmée pour effectuer une vérification de l'intégrité de la partie fonctionnelle substituable (8') avant son exécution en utilisant la valeur d'intégrité, et en ce que l'unité de traitement est programmée pour effectuer une authentification du bloc de données avant l' exécution de la première partie fonctionnelle substituable à exécuter contenue dans le bloc de données.

Les points d'entrée/sortie du programme d'exploitation sont ainsi disposés entre chaque partie fonctionnelle de sorte que l'unité de traitement peut court-circuiter une partie fonctionnelle originelle du programme d'exploitation en allant exécuter à sa place une partie fonctionnelle substituable enregistrée dans la mémoire morte programmable. En outre la multiplicité des points d'entrée/sortie du programme d'exploitation permet de limiter la taille des morceaux de programme constituant les parties fonctionnelles substituables enregistrées dans la mémoire morte programmable à la taille des parties fonctionnelles à remplacer. L'encombrement de la mémoire morte programmable du fait des parties fonctionnelles substituables est de la sorte relativement faible. Ces parties fonctionnelles substituables peuvent être enregistrées dans la mémoire morte programmable non seulement par le fabricant du circuit intégré mais également par l'émetteur des cartes, ce qui en simplifie la gestion.

Avantageusement, la partie fonctionnelle substituable est chargée dans une zone de début de la mémoire morte programmable.

Ceci permet d'accélérer la recherche des parties fonctionnelles substituables de sorte que l'exécution du programme d'exploitation ne soit pas ralentie de manière préjudiciable.

De préférence, la mémoire morte programmable comprend un indicateur de présence de partie fonctionnelle substituable.

Ainsi, l'unité de traitement peut détecter rapidement s'il est nécessaire de lire la mémoire morte programmable à la recherche d'une partie fonctionnelle substituable.

Un fraudeur pourrait être tenté d'utiliser une partie fonctionnelle substituable pour accéder aux informations confidentielles contenues dans le circuit intégré ou pour faire effectuer à l'unité de traitement des opérations normalement interdites. L'authentification de la partie fonctionnelle substituable permet de vérifier que la partie fonctionnelle substituable a été enregistrée par une personne autorisée et est donc, à priori, inoffensive.

Avantageusement alors, une signature est associée à la partie fonctionnelle substituable et l'unité de traitement est programmée pour vérifier l'authenticité de la signature et/ou la partie fonctionnelle substituable est chiffrée et l'authentification comprend une phase de déchiffrement et de vérification des bits de bourrage (ou bits de padding).

Ces modes d'authentification sont fiables et rapides.

L'invention a également pour objet un procédé selon la revendication 1.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

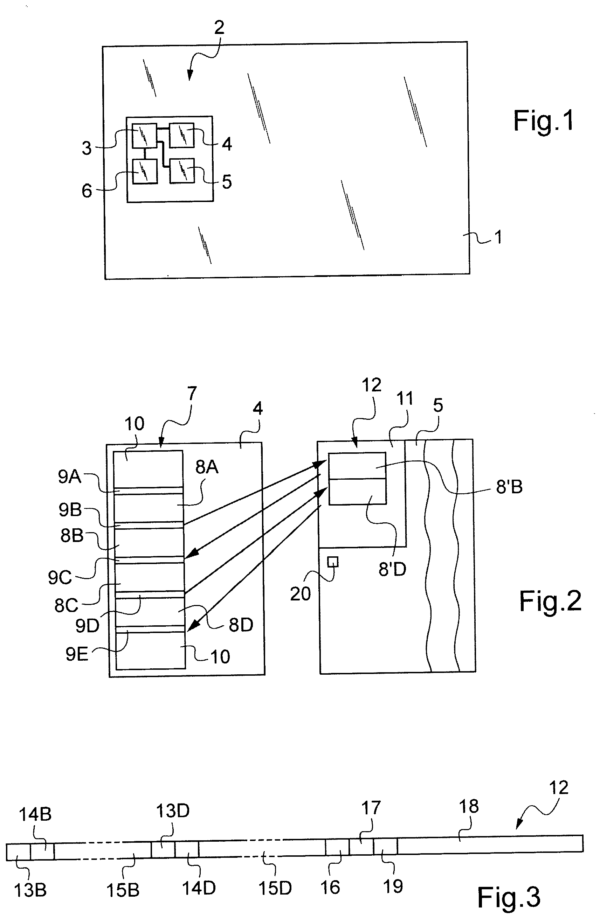

- la figure 1 représente schématiquement, par blocs, une carte à circuit intégré conforme à l'invention ;
- la figure 2 est une vue schématique par blocs du contenu des mémoires mortes de la carte ;
- la figure 3 est une représentation schématique, par blocs, d'une partie fonctionnelle substituable utilisée dans cette carte.

### DESCRIPTION DETAILLEE DE L'INVENTION

En référence aux figures, la carte conforme à l'invention comprend un corps 1 sur lequel est fixé un circuit intégré généralement désigné en 2 comprenant une unité de traitement 3, tel qu'un processeur, auquel sont reliées une mémoire morte ROM 4, une mémoire morte programmable 5 ici de type EEPROM, et une mémoire vive 6 de type RAM (« Ramdom access memory », mémoire à accès aléatoire). La structure physique de la carte conforme à l'invention est connue en elle-même.

La mémoire morte ROM 4 contient un programme d'exploitation, généralement désigné en 7, comprenant un module principal 10 et des parties fonctionnelles 8 (distinguées les unes des autres par les indices A, B, C, D) entre lesquels sont ménagés des points d'entrée/sortie 9 du programme (individualisés par les indices A à E).

Chaque partie fonctionnelle 8 est associée à un identifiant qui lui est propre.

Par programme d'exploitation, on entend un programme dont l'exécution permet à l'unité de traitement 3 de réaliser des fonctions de traitement correspondant à chaque partie de programme formant une partie fonctionnelle. Ce programme d'exploitation peut comprendre des parties assurant le fonctionnement de base de l'unité de traitement (Système d'exploitation) ou des parties applicatives. Le programme peut comprendre des modules fonctionnels regroupant plusieurs parties fonctionnelles.

La mémoire morte programmable 5 contient de façon connue en elle-même des données, confidentielles ou non, utilisées par l'unité de traitement lors de l'exécution du programme d'exploitation. La mémoire vive 6 contient elle les données reçues de l'extérieur ou destinées à être émises vers l'extérieur et les résultats intermédiaires de calculs réalisés par l'unité de traitement lors de l'exécution du programme d'exploitation.

La mémoire morte programmable 5 possède une zone de début 11 qui contient un bloc de données, généralement désigné en 12, comportant des parties fonctionnelles substituables 8' (individualisées au moyen des indices B et D) qui sont destinées à remplacer les parties fonctionnelles 8B et 8D. Le bloc 12 est enregistré sous la forme d'une répétition de motifs comprenant successivement :
- l'identifiant 13B de la partie fonctionnelle substituable 8'B ;
- une indication 14B de la longueur des données de la partie fonctionnelle substituable 8'B ;
- les données 15B en question ;
- une valeur d'intégrité calculée sur l'identifiant 13B, l'indication 14B et les données 15B (la valeur d'intégrité résulte par exemple d'un procédé de type CRC) ;
- un identifiant 13D de la partie fonctionnelle substituable 8'D ;
- une indication 14D de la longueur des données de la partie fonctionnelle substituable 8'D ;
- les données 15D en question ;
- un identifiant 16 de fin ;
- une indication 17 de la longueur des données de fin ;
- les données en question incorporant notamment une signature, et éventuellement un indicateur d'accélération 19 et une valeur d'intégrité.

Lors de l'exécution du programme d'exploitation, l'unité de traitement 3 vérifie la présence dans la mémoire morte programmable 5 d'un indicateur de présence 20 de parties fonctionnelles substituables 8'. Le cas échéant, l'unité de traitement 3 vérifie, pour chaque partie fonctionnelle 8 s'il existe une partie fonctionnelle substituable 8' et, si tel est le cas, exécute la partie fonctionnelle substituable à la place de la partie fonctionnelle 8 correspondante.

L'indicateur d'accélération 19 identifie le module fonctionnel dont une partie fonctionnelle doit être remplacée, ce qui permet d'accélérer l'exécution du programme.

Préalablement à l'exécution de chaque partie fonctionnelle, les identifiants des parties fonctionnelles substituables 8' sont parcourus et comparés avec l'identifiant de la partie fonctionnelle que l'unité de traitement 3 s'apprête à exécuter.

Pour exécuter ces parties fonctionnelles substituables 8', par exemple la partie fonctionnelle substituable 8'B l'unité de traitement sort du programme d'exploitation par le point d'entrée/sortie 9B qui précède la partie fonctionnelle 8B correspondante et, après exécution de la partie fonctionnelle substituable 8'B, rentre dans le programme d'exploitation par le point d'entrée/sortie 9C qui suit la partie fonctionnelle 8B correspondante.

Préalablement à l'exécution de la première partie fonctionnelle substituable 8'B, l'unité de traitement 3 procède à une étape d'authentification consistant à vérifier la signature du bloc 12 de parties fonctionnelles substituables 8'. Si la signature est authentifiée, les parties fonctionnelles substituables 8' seront exécutées normalement. Dans le cas contraire, l'unité de traitement 3 exécutera le programme d'exploitation 7 originel. En variante, on peut prévoir que l'unité de traitement 3 émette un signal d'alerte lorsque le bloc 12 de parties fonctionnelles substituables 8' n'est pas authentifié.

En outre, on prévoit de vérifier l'intégrité des parties fonctionnelles substituables avant leur exécution en utilisant la valeur d'intégrité 19 calculée sur l'identifiant 13B, l'indication 14B et les données 15B.

A chaque nouvelle exécution du programme d'exploitation, les informations de la zone de début 11 où est enregistré le bloc 12 de parties fonctionnelles substituables 8' et la signature de celui-ci sont récupérées au moyen d'une commande dédiée de l'unité de traitement 3. La réponse à cette commande peut prendre la forme :
- absence de partie fonctionnelle substituable, cette réponse peut être constituée par exemple par une suite d'octets de valeur FF ;
- partie fonctionnelle substituable enregistrée et validée, cette réponse peut être constituée par exemple de la liste des parties fonctionnelles à remplacer et de la signature du bloc signature ;
- partie fonctionnelle substituable chargée mais non validée, cette réponse étant par exemple une suite d'octets à 00.

Dans le deuxième cas, la signature est vérifiée avant l'exécution de la première partie fonctionnelle substituable 8'.

Les chargements des parties fonctionnelles 8' en mémoire morte programmable vont maintenant être décrits.

Avant le chargement, l'opérateur doit s'authentifier au moyen d'une clé.

Le bloc 12 de parties fonctionnelles substituables 8' est communiqué sous forme chiffrée à l'unité de traitement 3 pour être enregistré dans la zone de début 11 de la mémoire morte programmable 5. L'unité de traitement 3 effectue alors une étape de validation du bloc 12 de parties fonctionnelles substituables 8'. Cette étape de validation est réalisée en déchiffrant le bloc 12 de parties fonctionnelles substituables 8' et en vérifiant la conformité des bits de bourrage (ou « padding », bits utilisés lors du chiffrement). La vérification des bits de padding permet à la carte de s'assurer qu'elle est bien la destinataire souhaitée du bloc 12. Dans un deuxième temps, l'unité de traitement 3 vérifie la signature et l'élément d'intégrité dans le bloc 12 de parties fonctionnelles substituables 8'. A noter, que la signature peut elle-même constituer l'élément d'intégrité. L'élément d'intégrité peut par exemple être obtenu au moyen du procédé CRC (de l'anglais « Cyclic Redundancy Check » ou contrôle de redondance cyclique) consistant à traiter le bloc de données comme une suite de coefficients binaires d'un polynôme.

Si l'une de ces deux vérifications échoue, le chargement est interrompu et le bloc est invalidé, rendant celui-ci inutilisable. Une fois les parties fonctionnelles substituables 8' enregistrées dans la mémoire morte programmable 5, la taille de la mémoire disponible est calculée et mémorisée. L'indicateur de présence de parties fonctionnelles substituables est mise à jour dans une zone déterminée de la mémoire morte programmable 5.

Lorsque l'une des parties fonctionnelles substituables 8' est devenue inutile (par exemple si elle ne devait être exécutée qu'un nombre limité de fois), cette partie fonctionnelle substituable peut être supprimée en rechargeant par exemple un nouveau bloc 12 de parties fonctionnelles substituables 8' ne contenant pas la partie fonctionnelle substituable périmée. Il est également possible d'effacer toutes les parties fonctionnelles substituables.

Le chiffrement du bloc de parties fonctionnelles substituables est intéressant notamment lorsque la fabrication et/ou la mise à niveau des cartes est sous-traitée à un fournisseur réalisant des cartes pour des concurrents. Les codes de déchiffrement différents peuvent être associés à chaque concurrent pour éviter que ceux-ci aient par mégarde ou par malveillance accès au bloc de parties fonctionnelles substituables de leurs concurrents. Ceci empêche également plus généralement un tiers d'accéder au contenu du bloc de parties fonctionnelles substituables.

Bien entendu, l'invention n'est pas limitée au mode de réalisation qui vient d'être décrit, mais englobe au contraire toute variante reprenant, avec des moyens équivalents, les caractéristiques essentielles énoncées plus haut.

En particulier, le nombre et le format des parties fonctionnelles substituables peuvent être modifiés. L'architecture du bloc de parties fonctionnelles substituables peut également être modifiée.

En outre, d'autres types de mémoires mortes programmables peuvent être utilisés à la place d'une EEPROM, et notamment une mémoire morte programmable de type EPROM (de l'anglais « Erasable programmable Read-Only Memory »).

## Revendications

1. Procédé de modification d'un programme originel contenu dans une mémoire ROM (4) et exécutable par une unité de traitement (3) d'un circuit intégré (2), le programme originel comprenant des parties fonctionnelles associées chacune à un identifiant et un point d'entrée/sortie (9), le procédé comprenant les étapes de :
- enregistrer dans la mémoire morte programmable un bloc de données contenant au moins une partie fonctionnelle substituable (8') qui correspond à une des parties fonctionnelles du programme originel enregistré dans la mémoire morte ROM et qui est associée à un identifiant correspondant à celui de la partie fonctionnelle correspondante du programme originel, l'enregistrement n'étant effectué qu'en cas de validation du bloc de données, et le bloc de données étant enregistré dans la mémoire morte programmable sous la forme d'au moins un motif comprenant successivement l'identifiant (13) de la partie fonctionnelle substituable (8'), une indication (14) de la longueur de la partie fonctionnelle substituable, la partie fonctionnelle substituable et une valeur d'intégrité calculée sur l'identifiant, l'indication et la partie fonctionnelle substituable ;
- lors de l'exécution du programme originel par l'unité de traitement, préalablement à l'exécution de chaque partie fonctionnelle du programme originel, lire l'identifiant de chaque partie fonctionnelle substituable et le comparer à celui de la partie fonctionnelle du programme originel à exécuter et, le cas échéant, exécuter la partie fonctionnelle substituable à la place de la partie fonctionnelle correspondante du programme originel si l'intégrité de la partie fonctionnelle substituable est validée préalablement à son exécution en utilisant la valeur d'intégrité, une authentification du bloc de données étant également réalisée avant l'exécution de la première partie fonctionnelle substituable à exécuter contenue dans le bloc de données.

2. Procédé selon la revendication 1, dans lequel le bloc de données est communiqué sous forme chiffrée et comprend des bits de bourrage, et la validation comprend l'étape de faire déchiffrer le bloc de données par l'unité de traitement (3) et de vérifier la conformité des bits de bourrage utilisés lors du chiffrement.

3. Procédé selon la revendication 1, comprenant l'étape d'effacer une partie fonctionnelle substituable (8') après au moins une utilisation.

4. Procédé selon la revendication 1, comprenant l'étape préalable à l'exécution du programme originel de vérifier dans la mémoire morte programmable (5) la présence d'un indicateur de présence (20) de partie fonctionnelle substituable.

5. Procédé selon la revendication 1, dans lequel le bloc de données est chargé dans une zone de début (12) de la mémoire morte programmable (5).

6. Carte à circuit intégré comportant une unité de traitement (3) associée à une mémoire morte ROM (4) et à une mémoire morte programmable (5), la mémoire morte ROM contenant un programme d'exploitation (10) qui est exécutable par l'unité de traitement et qui comporte des parties fonctionnelles (8) définissant chacune une fonction de l'unité de traitement, le programme comportant un point d'entrée/sortie (9) pour chaque partie fonctionnelle et un identifiant est associé à chaque partie fonctionnelle, en ce que la mémoire morte programmable contient un bloc de données comprenant au moins une partie fonctionnelle substituable (8') qui correspond à une des parties fonctionnelles du programme d'exploitation contenu dans la mémoire morte ROM et qui est associée à un identifiant correspondant à celui de la partie fonctionnelle correspondante du programme d'exploitation, **caractérisé en ce que** le bloc de données est enregistré dans la mémoire morte programmable (5) sous la forme d'au moins un motif comprenant successivement l'identifiant (13) de la partie fonctionnelle substituable (8'), une indication (14) de la longueur de la partie fonctionnelle substituable, la partie fonctionnelle substituable et une valeur d'intégrité calculée sur l'identifiant, l'indication et la partie substituable, **en ce que** l'unité de traitement est programmée pour, préalablement à l'exécution de chaque partie fonctionnelle du programme d'exploitation, lire l'identifiant de chaque partie fonctionnelle substituable et le comparer à celui de chaque partie fonctionnelle du programme d'exploitation à exécuter et, le cas échéant, exécuter la partie fonctionnelle substituable à la place de la partie fonctionnelle correspondante ; **en ce que** l'unité de traitement (3) est programmée pour effectuer une vérification de l'intégrité de la partie fonctionnelle substituable (8') avant son exécution en utilisant la valeur d'intégrité, et **en ce que** l'unité de traitement est programmée pour effectuer une authentification du bloc de données avant l' exécution de la première partie fonctionnelle substituable à exécuter contenue dans le bloc de données.

7. Carte à circuit intégré selon la revendication 6, dans laquelle la mémoire morte programmable (5) comprend un indicateur de présence (20) de partie fonctionnelle substituable.

8. Carte à circuit intégré selon la revendication 6, dans laquelle une signature est associée à la ou les parties fonctionnelles substituables (8') et l'unité de traitement (3) est programmée pour vérifier l'authenticité de la signature.

9. Carte à circuit intégré selon la revendication 8, dans laquelle la ou les parties fonctionnelles substituables (8') sont chiffrées et l'authentification comprend une phase de déchiffrement et de vérification des bits de bourrage.

10. carte à circuit intégré selon la revendication 6, dans laquelle le bloc de données est chargé dans une zone de début (12) de la mémoire morte programmable (5).

## Patentansprüche

1. Verfahren zum Verändern eines ursprünglichen Programms, das in einem ROM-Speicher (4) enthalten und von einer Verarbeitungseinheit (3) eines integrierten Schaltkreises (2) ausführbar ist, wobei das ursprüngliche Programm Funktionsteile umfasst, die jeweils mit einer Kennung und einem Einlass-/Auslasspunkt (9) verknüpft sind, wobei das Verfahren die Schritte umfasst:
- Abspeichern eines Datenblocks in den programmierbaren Festwertspeicher, wobei der Datenblock mindestens einen substituierbaren Funktionsteil (8') enthält, der einem der Funktionsteile des ursprünglichen Programms entspricht, das in dem ROM-Festwertspeicher gespeichert ist, und der mit einer Kennung verknüpft ist, die der des entsprechenden Funktionsteils des ursprünglichen Programms entspricht, wobei das Speichern nur im Falle einer Validierung des Datenblocks erfolgt, und wobei der Datenblock in den programmierbaren Festwertspeicher in Form mindestens eines Musters gespeichert wird, das nacheinander die Kennung (13) des substituierbaren Funktionsteils (8'), eine Angabe (14) der Länge des substituierbaren Funktionsteils, den substituierbaren Funktionsteil und einen Integrationswert umfasst, der über die Kennung, die Angabe und den substituierbaren Funktionsteil berechnet wird;
- während der Ausführung des ursprünglichen Programms durch die Verarbeitungseinheit vor dem Ausführen jedes Funktionsteils des ursprünglichen Programms Lesen der Kennung jedes substituierbaren Funktionsteils und Vergleichen derselben mit der des Funktionsteils des auszuführenden ursprünglichen Programms und gegebenenfalls Ausführen des substituierbaren Funktionsteils anstelle des entsprechenden Funktionsteils des ursprünglichen Programms, wenn die Integrität des substituierbaren Funktionsteils vor seinem Ausführen validiert wird, indem der Integrationswert verwendet wird, wobei eine Authentifizierung des Datenblocks ebenso vor dem Ausführen des ersten auszuführenden substituierbaren Funktionsteils erfolgt, der in dem Datenblock enthalten ist.

2. Verfahren nach Anspruch 1, bei dem der Datenblock in verschlüsselter Form übertragen wird und Füllbits umfasst, und die Validierung den Schritt des Entschlüsselns des Datenblocks durch die Verarbeitungseinheit (3) und des Verifizierens der Übereinstimmung der während der Verschlüsselung verwendeten Füllbits umfasst.

3. Verfahren nach Anspruch 1, umfassend den Schritt des Löschens eines substituierbaren Funktionsteils (8') nach mindestens einer Nutzung.

4. Verfahren nach Anspruch 1, umfassend vor dem Ausführen des ursprünglichen Programms den Schritt des Verifizierens in dem programmierbaren Festwertspeicher (5) des Vorhandenseins eines Anzeigers (20) zum Anzeigen des Vorhandenseins eines substituierbaren Funktionsteils.

5. Verfahren nach Anspruch 1, bei dem der Datenblock in einen Anfangsbereich (12) des programmierbaren Festwertspeichers (5) geladen wird.

6. Chipkarte, umfassend eine Verarbeitungseinheit (3), die mit einem ROM-Festwertspeicher (4) und einem programmierbaren Festwertspeicher (5) verknüpft ist, wobei der ROM-Festwertspeicher ein Betriebsprogramm (10) enthält, das von der Verarbeitungseinheit ausführbar ist und Funktionsteile (8) umfasst, die jeweils eine Funktion der Verarbeitungseinheit definieren, wobei das Programm einen Eintritts-/Austrittspunkt (9) für jeden Funktionsteil umfasst, und eine Kennung mit jedem Funktionsteil verknüpft ist, dass der programmierbare Festwertspeicher einen Datenblock enthält, der mindestens einen substituierbaren Funktionsteil (8') umfasst, der einem der Funktionsteile des Betriebsprogramms entspricht, das in dem ROM-Festwertspeicher enthalten ist, und der mit einer Kennung verknüpft ist, die der des entsprechenden Funktionsteils des Betriebsprogramms entspricht, **dadurch gekennzeichnet, dass** der Datenblock in den programmierbaren Festwertspeicher (5) in Form mindestens eines Musters gespeichert wird, das nacheinander die Kennung (13) des substituierbaren Funktionsteils (8'), eine Angabe (14) der Länge des substituierbaren Funktionsteils, den substituierbaren Funktionsteil und einen Integritätswert umfasst, der über die Kennung, die Angabe und den substituierbaren Teil berechnet wird, dass die Verarbeitungseinheit programmiert ist, um vor dem Ausführen jedes Funktionsteils des Betriebsprogramms die Kennung jedes substituierbaren Funktionsteils zu lesen und diese mit der jedes Funktionsteils des auszuführenden Betriebsprogramms zu vergleichen und gegebenenfalls den substituierbaren Funktionsteil anstelle des entsprechenden Funktionsteils auszuführen; dass die Verarbeitungseinheit (3) programmiert ist, um eine Verifizierung der Integrität des substituierbaren Funktionsteils (8') vor seiner Ausführung durchzuführen, indem der Integritätswert verwendet wird, und dass die Verarbeitungseinheit programmiert ist, um eine Authentifizierung des Datenblocks vor der Ausführung des ersten auszuführenden substituierbaren Funktionsteils, der in dem Datenblock enthalten ist, durchzuführen.

7. Chipkarte nach Anspruch 6, bei der der programmierbare Festwertspeicher (5) einen Anzeiger (20) zum Anzeigen des Vorhandenseins eines substituierbaren Funktionsteils umfasst.

8. Chipkarte nach Anspruch 6, bei der eine Signatur mit der oder den substituierbaren Funktionsteilen (8') verknüpft ist und die Verarbeitungseinheit (3) programmiert ist, um die Authentizität der Signatur zu verifizieren.

9. Chipkarte nach Anspruch 8, bei der der oder die substituierbaren Funktionsteile (8') verschlüsselt sind und die Authentifizierung eine Phase der Entschlüsselung und der Verifizierung der Füllbits umfasst.

10. Chipkarte nach Anspruch 6, bei der der Datenblock in einen Anfangsbereich (12) des programmierbaren Festwertspeichers (5) geladen wird.

## Claims

1. Method of modifying an original program contained in a ROM memory (4) and executable by a processor unit (3) of an integrated circuit (2), the original program including functional parts each associated with an identifier and an input/output point (9), the method including the steps of:
- storing in the programmable read-only memory a block of data containing at least one substitutable functional part (8') that corresponds to one of the functional parts of the original program stored in the ROM read-only memory and that is associated with an identifier corresponding to that of the corresponding functional part of the original program, this storage being affected only in the event of validation of the block of data and the block of data being stored in the programmable read-only memory in the form of at least one pattern successively including the identifier (13) of the substitutable functional part (8'), an indication (14) of the length of the substitutable functional part, the substitutable functional part and an integrity value calculated from the identifier, the indication and the substitutable functional part;
- at the time of execution of the original program by the processor unit, before execution of each functional part of the original program, reading the identifier of each substitutable functional part and comparing it to that of the functional part of the original program to be executed and where appropriate executing the substitutable functional part instead of the corresponding functional part of the original program if the integrity of the substitutable functional part is validated before its execution using the integrity value, the block of data being also authenticated before executing the first substitutable functional part to be executed contained in the block of data.

2. Method according to claim 1, wherein the block of data is communicated in encrypted form and includes stuffing bits and validation includes a step wherein the processor unit (3) decrypts the block of data and verifies the conformity of the stuffing bits used during encryption.

3. Method according to claim 1, including a step of deleting a substitutable functional part (8') after at least one use.

4. Method according to claim 1, including a step of verifying in the programmable read-only memory (5) the presence of an indicator (20) of the presence of a substitutable functional part before executing the original program.

5. Method according to claim 1, wherein the block of data is loaded into a start area (12) of the programmable read-only memory (5).

6. Smart card including a processor unit (3) associated with a ROM read-only memory (4) and a programmable read-only memory (5), the ROM read-only memory containing an operating program (10) that can be executed by the processor unit and includes functional parts (8) each defining a function of the processor unit, the program including an entry/exit point (9) for each functional part and an identifier associated with each functional part, wherein the programmable read-only memory contains a block of data including at least one substitutable functional part (8') that corresponds to one of the functional parts of the operating program contained in the ROM read-only memory and is associated with an identifier corresponding to that of the corresponding functional part of the operating program, **characterised in that** the block of data is stored in the programmable read-only memory (5) in the form of at least one pattern successively including the identifier (13) of the substitutable functional part (8'), an indication (14) of the length of the substitutable functional part, the substitutable functional part and an integrity value calculated from the identifier, the indication and the substitutable part, **in that** the processor unit is programmed to read the identifier of each substitutable functional part of the operating program before execution of each functional part and to compare it to that of each functional part of the operating program to be executed and where appropriate to execute the substitutable functional part instead of the corresponding functional part, **in that** the processor unit (3) is programmed to verify the integrity of the substitutable functional part (8') using the integrity value before its execution, and **in that** the processor unit is programmed to authenticate the block of data before execution of the first substitutable functional part to be executed contained in the block of data.

7. Smart card according to claim 6, wherein the programmable read-only memory (5) includes an indicator (20) of the presence of a substitutable functional part.

8. Smart card according to claim 6, wherein a signature is associated with the substitutable functional part or parts (8') and the processor unit (3) is programmed to verify the authenticity of the signature.

9. Smart card according to claim 8, wherein the substitutable functional part or parts (8') are encrypted and authentication includes a step of decrypting and verifying the stuffing bits.

10. Smart card according to claim 6, wherein the block of data is loaded into a start area (12) of the programmable read-only memory (5).
